# EUROPEAN PATENT SPECIFICATION

(11) **EP 0 632 374 B1**
(45) Date of publication and mention of the grant of the patent: **22.09.1999**
(21) Application number: 94110074.5
(22) Date of filing: 29.06.1994
(51) Int. Cl.: G06F 9/46, G06F 15/16

(54) **Method of permitting the exchange of information between processes through a communication device**
Verfahren um den Informationsaustausch zwischen Prozessen mittels eines Kommunikationsgerätes zu bewerkstelligen
Méthode pour permettre l'échange d'information entre des processus par un dispositif de communication

(30) Priority: 02.07.1993 IT MI931427
(43) Date of publication of application: 04.01.1995
(73) Proprietor: ALCATEL, 75008 Paris (FR)
(72) Inventor: Butto, Fabio, I-98100 Messina (IT); Cosenza, Nicola, I-84010 Raito (SA) (IT)
(74) Representative: Knecht, Ulrich Karl, Dipl.-Ing.

(56) References cited:
- EP-A- 0 164 972
- EP-A- 0 380 926
- EP-A- 0 485 252
- WO-A-92/17845
- THE 14TH ANNUAL INTERNATIONAL SYMPOSIUM ON COMPUTER ARCHITECTURE, 2 June 1987, PITTSBURGH, USA pages 178 - 188 U. RAMACHANDRAN 'Hardware support for interprocess communication'
- MICROPROCESSORS AND MICROSYSTEMS, vol.16, no.2, 1992, LONDON GB pages 81 - 89 M. CVIJOVIC AND M. KUNC 'An approach to the design of distributed real-time operating systems'

## Description

The present invention relates to a method of permitting the exchange of information between processes through a communication device.

Control devices are known, e.g., from patent applications EP-A 0 492 177 and EP-A 0 164 972, which, when connected to a storage device, are capable of handling communication between processes upon suitable configuration; these devices can be used in connection with one or more processors. In particular, through the device disclosed in the first of the two mentioned patent applications, through the sending of suitable commands, a RAM device can be configured as a set of independent memory blocks each operating in accordance with a mode selected from FIFO, LIFO, circular queue, etc.; through further commands, data can be, e.g., introduced into and extracted from said memory blocks without regard for their operation mode. Such devices, although very effective in releasing the processors from handling the communication between processes, nonetheless have the disadvantage of being capable of carrying out low level commands only, in general strictly related to their internal hardware structure and certain characteristics of the special device used.

Such disadvantage has the practical implication of requiring a widened knowledge of the devices by the programmer who develops software for hardware environments that include such devices; if such software is for multiprocess real-time applications the possibility of making mistakes is still higher since the concurrent access to such devices is to be taken into account, too.

Moreover, such software will be difficult to modify.

It is an object of the present invention to overcome these advantages. This object is achieved through the method of permitting the exchange of information between processes through a communication device as set forth in claim 1, and the processing system as set forth in claim 7.

Further advantageous aspects of the present invention are set forth in the subclaims.

By virtualizing, through software, more precisely the system software (advantageously realizable as firmware), a communication device capable of carrying out high level commands realized directly in hardware, thus increasing the speed of its execution with respect to a software implementation and dedicated for each process, the above mentioned drawbacks are restricted to the system software and therefore extremely reduced as to their harmful effects.

The present invention will become more apparent from the following description taken in conjunction with the attached drawings wherein:
- Fig. 1 is a block diagram of an hardware environment according to the present invention, and
- Fig. 2 is a concept diagram of a software environment in accord to the present invention.

As already said, in a multiprocess software environment, realized on an hardware environment formed by one or more processors, there is always the need of exchanging information between the various processes; these can be divided into system processes and user processes; another possible subdivision is the one made on the basis of execution time requirements.

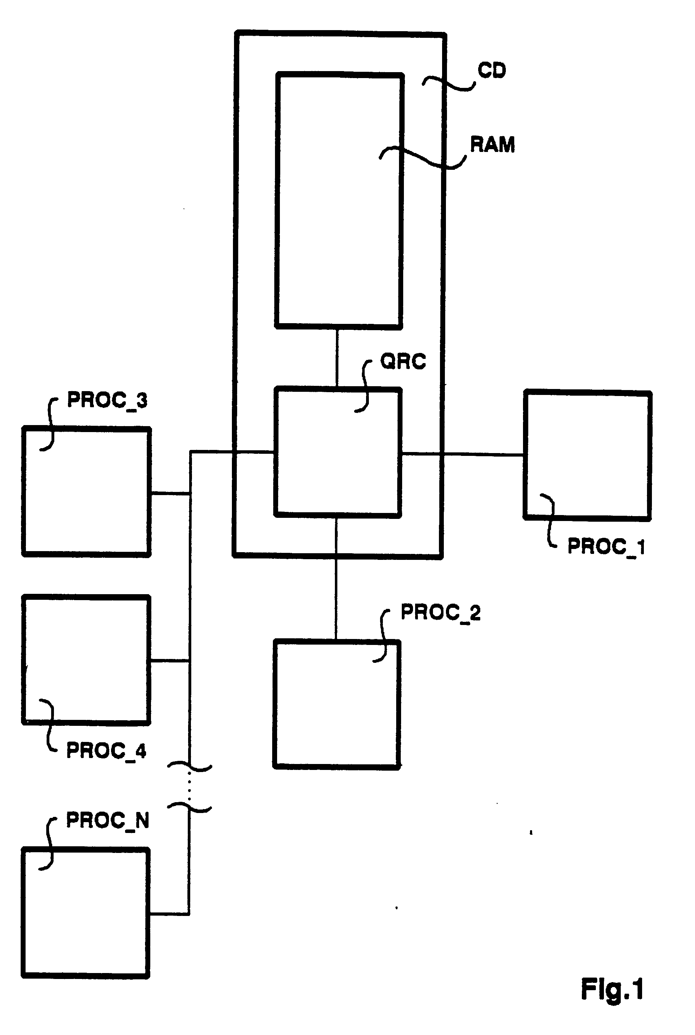

The method in accordance with the present invention is concerned with the case in which such information exchange occurs through the use of a communication device, indicated by CD in Fig. 1, and hence not simply through the system software or the various processors, indicated by PROC-1, ..., PROC-N in Fig. 1.

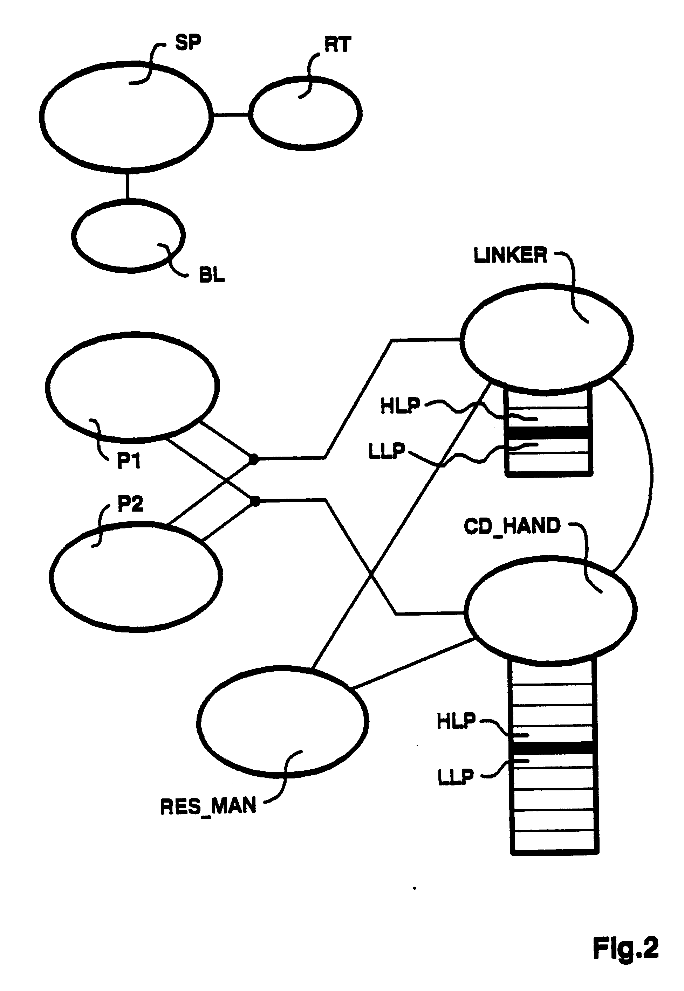

In the following the description of the method will be made particularly with reference to Fig. 2.

The method of permitting the exchange of information through the communication device CD, between a first user process P1 and a second user process P2, comprises the steps designed to :
a) activate one system linker process labelled as LINKER, able to establish a communication channel between the user processes P1 and P2 using a communication device CD, on receipt of a first high level primitive called, e.g., CREATE - LINK, realized directly in hardware, thus increasing the speed of its execution with respect to a software implementation and
b) activate at least one system handler process; labelled CD-HAND in the figure, able to transfer information through the channel established on device CD, from one of the user processes to the other on receipt of a second high level, primitive of send-message, called; e.g., SEND-MSG, and of a third high level primitive of wait-message, called, e.g., WAIT-MSG realized directly in hardware, thus increasing the speed of its execution with respect to a software implementation.

The CREATE-LINK primitive may provide, for instance, at least the following parameters, in case of unidirectional channel:
- P-MITT:: sender process identifier;
- P-DCST:: addressee process identifier;
- LINK-TYPE:: data exchange mode (FIFO, LIFO, ...);
- CHAN-PTR:: identifier of the storage area used for data exchange, which can be understood also as identifier of the established channel; such identifier is a primitive output parameter, of course.

Naturally, the primitive may provide an output parameter indicating the outcome of the channel establishing operation. In order to establish a bidirectional channel, it will be then enough to send such primitive twice with suitable parameters.

When it is desired to expressly contemplate the possibility of requiring the establishment of a bidirectional channel by the user processes, a further parameter in the CREATE-LINK primitive can be provided, or two separate primitives, called, e.g., CREATE-LINK-SIMPLEX and CREATE-LINK-DUPLEX, can be provided.

A lot of variants to communication between processes can be thought: for instance a communication channel having a sender and several addressees.

The execution of such a primitive, in a multiprocessor environment will require to determine on which processors the sender process and the addressee process are active. To this end, the existence of a particular system process can be contemplated, which is responsible of creation and destruction of the user processes and which at any time is able to know their status (such system process could be the so-called supervisor process, i.e. the one that takes care of the alternate execution of the various processes of the system); it could have a primitive providing the LINKER process with needed information.

The parameters of the SEND-MSG primitive may be at least:
- P-DEST:: identifier of the addressee process to which one wishes to send a message;
- CHAN-PTR:: identifier of the channel to be used for sending a message;
- MSG-PTR:: identifier of the storage area containing a message to be sent.

Naturally, the primitive may provide an output parameter indicating the outcome of the sending operation.

The parameters of the WAIT-MSG primitive can be at least:
- P-MITT:: identifier of the sender message from which a message is expected;
- CHAN-PTR:: identifier of the channel from which a message is expected;
- MSG-PTR:: identifier or the storage area which shall contain the expected message.

Naturally, also the last primitive may provide an output parameter indicating the outcome of the receive operation. The last two primitives may be, e.g., suspensive for the processes sending them: that is to say the process sending a SEND-MSG primitive does not go on with its execution until the message is effectively sent or the process sending a WAIT-MSG primitive does not go on with its prosecution until the message is effectively received.

A possible and advantageous manner of solving the problem of the concurrent access to device CD is to provide a further step designed to:
c) activate at least one process arbitrator of system, called RES-MAN, designed to control the concurrent access to device CD by the system processes.

The access to device CD must be, as far as possible carried out by system processes only, and ideally by processes LINKER and CD-HAND only or, still better, by CD-HAND process only. This can be realized by providing process RES-MAN with two primitives called, e.g., GET-CD and RELEASE-CD, with which any process needing access to device CD requires the exclusive access and releases it after use. Process RES-MAN, in addition may take care of the exclusive access of all resources of the system with similar pairs of primitives: one for each resource.

Should process P1 and process P2 be active on two different processors, step b) must be able to activate a first and a second handler processes CD-HAND, and then the transfer of information occurs on the basis of reception by the first process handling the primitive SEND-MSG and of reception by the second process handling the primitive WAIT-MSG.

It is clear that the high level primitives CREATE-LINK, SEND-MSG and WAIT-MSG are sent by the user processes, and it is important to see that these processes communicate as far as possible only by using such high level primitives.

Up to now it has always been spoken of high level primitives that processes LINKER and CD-HAND are able to receive; naturally, they can receive also low level primitives; for instance, process LINKER may receive from process CD-HAND a low level primitive for the request of detailed information about a particular channel established of device CD.

Process CD-HAND can he able to receive, e.g., from process LINKER, low level primitives concerning initialization and test of device CD, readout and write of data from and to device CD, transmit and receive of signallings to and from device CD; in this case the access to device CD occurs only through the intermediation of process CD-HAND; thererore it will be possible to confine inside it all the peculiarities of the divice itself and to see that the use of a different type of communication device does not entail modifications in other processes of the system.

It is necessary to see that all such low level primitives in general are not sent by the user processes so that the peculiarities relative to information exchange between processes result still more confined.

As it is obvious, the method of the present invention finds its most natural implementation in at least one program and therefore the steps of the method consist of instruction sequences coded in machine language characters and recorded into storage means.

Still referring to Fig. 2 the software environment in accordance with the present invention will now be described.

Such software environment comprises at least one first user process P1 and a second user process P2, and further comprises:
a) a system linker process LINKER designed to establish a communication device CD between the user processes on receipt of the high level CREATE-LINK primitive, and
b) at least one system handler process CD-HAND capable of transferring information through the communication device CD from one of the user processes to the other on receipt of the high level send-message primitive SEND-MSG and of the high level wait-message primitive WAIT-MSG.
   Naturally, all such processes are active simultaneously and in general a system supervisor process SP has the function of realizing their alternate execution on the same processor; the alternate execution can be realized, less advantageously from the simplicity of programming viewpoint, also without the supervisor process SP, through a mechanism of direct transfer of control between processes.
   If the user processes are active on two different processors, then the environment comprises a first and a second handler processes CD-HAND designed to transfer information on receipt of primitive SEND-MSG by the first handler process and of primitive WAIT-MSG by the second handler process; naturally, a supervisor process may be activated on each processor, but this is obvious since every processor houses multiprocess software environments.
   The environment may further comprise:
c) a system arbitrator process RES-MAN, also active, designed to control the concurrent access to the communication device CD by system processes.

In Fig. 2 the various processes have been indicated by ellipses; the various ellipses are linked each other by lines which represent the main links between processes in terms of transmit and receive of primitives as follows: processes P1 and P2 send to and/or receive primitives from processes LINKER and CD-HAND, processes LINKER and CD-HAND send to and/or receive primitives from process RES-MAN and from each other; in addition there are represented the supervisor process SP which is in connection with all the processes of the software system and two processes RT and BL, strictly related to process SP, that may even be not present, and that take care of the execution control respectively of the processes having strict time requirements and of the processes without time requirements.

Still referring to Fig. 2 there are represented therein, through two series of stacked rectangles, the high level primitives HLP and the low level primitives LLP of processes LINKER and CD-HAND.

Lastly, it is desired to point out that the software environment described above represents all the bare minimum for realizing the method in accordance with the present invention: in particular, as the hardware environment is varied, the number of processes LINKER, CD-HAND, RES-MAN, SP, etc. can be much higher and the links between them more complicated.

Referring now to Fig. 1, a hardware environment in accordance with the present invention will be illustrated briefly.

Such an environment comprises at least one processor PROC-2 and a communication device CD connected with said processor PROC-2, and it is programmed in such a way that processor PROC-2 is able to realize the steps of the method in accordance with the present invention. In Fig. 1 there is shown a more complicated environment comprising a plurality of processors PROC-1, PROC-2, PROC-3, PROC-4, ... PROC-N and the device CD connected with such processors. Such connections can be of various types, e.g., connection with PROC-1 is serial, connection with PROC-2 is a parallel one and connection with remaining processors is a bus-shared one. In the embodiment of Fig. 1, the device CD is realized by the connection of a random access memory RAM connected with a control Device QRC of the type described in the patent applications mentioned above.

Naturally the hardware environment, i.e. at least the various processors, must be programmed in such a way as all processors can realize the steps of the method in accordance with the present invention.

## Claims

1. Method of permitting the exchange of information, through a communication device (CD), between a first user process (P1) and a second user process (P2), characterized in that it comprises the steps of:
a) activating a system linker process (LINKER) through a system software capable of establishing a communication channel on said device (CD) between said user processes (P1, P2) on receipt of a first primitive implemented directly in hardware (CREATE-LINK), and
b) activating at least one system handler process (CD-HAND) through said system software capable of transferring information, through said channel established on said device (CD), from one of said user process to the other one on receipt of a second send-message, primitive implemented directly in hardware (SEND-MSG) and of a third wait-message, primitive implemented directly in hardware (WAIT-MSG).

2. Method according to claim 1 further comprising the step of:
c) activating at least one system arbitrator process (RES-MAN) capable of controlling the concurrent access to said device (CD) by said system processes.

3. Method according to claim 1, wherein said step b) is capable of activating a first and a second handler processes (CD-HAND), and wherein such transfer of information occurs on receipt of said second primitive by said first handler process and on receipt of said third primitive by said second handler process.

4. Method according to claim 1, wherein said high level primitives are sent by said user processes.

5. Method according to claim 1, characterized in that said handler process is designed to receive low level primitives concerning initialization and test of said device, readout and write of data from and into said device, transmit and receive signallings to and from said device; and in that said low level primitives in general cannot be sent by a user process.

6. Method according to any of the preceding claims, characterized in that said steps consist in sequences of machine language coded instructions stored in storage means.

7. Processing system of the type including at least one user process (P1) and a second user process (P2), characterized by comprising:
a) a system linker process (LINKER) designed to establish a communication channel on a communication device (CD) between said user processes on receipt of a first high level primitive (CREATE-LINK), and
b) at least one system handler process (CD-HAND) capable of transferring information through said communication device (CD) from one of said user processes to the other one on receipt of a second send-message high level primitive (SEND-MSG) and of a third wait-message high level primitive (WAIT-MSG);
in which all said processes are active.

8. Processing system according to claim 7, comprising a first and a second handler processes (CD-HAND) capable of transferring information on receipt of said second primitive by said first handler process and on receipt of said third primitive by said handler process.

9. Processing system according to claim 7, further comprising:
c) a system arbitrator process (RES-MAN) designed to control the concurrent access to said communication device (CD) by said system processes;
wherein all said processes are active.

## Patentansprüche

1. Verfahren zum Bewerkstelligen des Informationsaustausches zwischen einem ersten Benutzerprozeß (P1) und einem zweiten Benutzerprozeß (P2) durch ein Kommunikationsgerät (CD), **dadurch gekennzeichnet,** daß es die Schritte umfaßt:
a) Aktivieren eines System-Verbindungsprozesses (VERBINDER) mittels einer System-Software, der in der Lage ist, bei Empfang eines unmittelbar Hardware-implementierten ersten Zeichenelements (SCHAFFE-VERBINDUNG) einen Kommunikationskanal in dem Gerät (CD) zwischen den Benutzerprozessen (P1, P2) aufzubauen, und
b) Aktivieren wenigstens eines System-Hand-habungsprozesses (CD-HAND) mittels der System-Software, der in der Lage ist, bei Empfang eines unmittelbar Hardware-implementierten zweiten Sendenachricht-Zeichenelements (SENDE-MSG) und eines unmittelbar Hardware-implementierten dritten Wartenachricht-Zeichenelements (WARTE-MSG) Informationen von einem der Benutzerprozesse über den von in Gerät (CD) aufgebauten Kanal zu dem anderen Benutzerprozeß zu übermitteln.

2. Verfahren nach Anspruch 1, das ferner den Schritt umfaßt:
c) Aktivieren wenigstens eines System-Entscheiderprozesses (RES-MAN), der in der Lage ist, den gleichzeitigen Zugriff auf das Gerät (CD) durch die Systemprozesse zu steuern.

3. Verfahren nach Anspruch 1, in dem der Schritt b) in der Lage ist, einen ersten und einen zweiten Handhabungsprozeß (CD-HAND) zu aktvieren, und in dem bei Empfang des zweiten Zeichenelements durch den ersten Handhabungsprozeß und bei Empfang des dritten Zeichenelements durch den zweiten Handhabungsprozeß eine solche Übermittlung von Information auftritt.

4. Verfahren nach Anspruch 1, in dem die Hochpegel-Zeichenelemente von den Benutzerprozessen gesendet werden.

5. Verfahren nach Anspruch 1, dadurch gekennzeichnet, daß der Handhabungsprozeß ausgelegt ist, Tiefpegel-Zeichenelemente betreffend eine Initialisierung und einem Test des Gerätes, einem Auslesen und einem Schreiben von Daten von und in das Gerät, einem Übertragen und einem Empfangen von Zeichengaben zu und von dem Gerät zu empfangen; und daß die Tiefpegel-Zeichenelemente im allgemeinen nicht durch einen Benutzerprozeß gesendet werden können.

6. Verfahren nach einem der vorhergehenden Ansprüche, dadurch gekennzeichnet, daß die Schritte aus Sequenzen von in Maschinensprache codierten Befehlen bestehen, die in dem Speichermittel gespeichert sind.

7. Verarbeitungssystem, das zumindest einen
Benutzerprozeß (P1) und einen zweiten Benutzerprozeß (P2) enthalten kann, **dadurch gekennzeichnet,** daß es umfaßt:
a) einen System-Verbindungsprozeß (VERBINDER), der ausgelegt ist, bei Empfang eines ersten Hochpegel-Zeichenelements (SCHAFFE-VERBINDUNG) einen Kommunikationskanal in einem Kommunikationsgerät zwischen den Benutzerprozessen aufzubauen, und
b) wenigstens einen System-Handhabungsprozeß (CD-HAND), der in der Lage ist, bei Empfang eines zweiten Hochpegel-Sendenachricht-Zeichenelements (SENDE-MSG) und eines dritten Hochpegel-Wartenachricht-Zeichenelements (WARTE-MSG) Informationen von einem der Benutzerprozesse über das Kommunikationsgerät (CD) zu dem anderen Benutzerprozeß zu übermitteln;
in welchem alle diese Prozesse aktiv sind.

8. Verarbeitungssystem nach Anspruch 7, das einen ersten und einen zweiten Handhabungsprozeß (CD-HAND) umfaßt, die in der Lage sind, bei Empfang des zweiten Zeichenelements durch den ersten Handhabungsprozeß und bei Empfang des dritten Zeichenelements durch den Handhabungsprozeß Information zu übermitteln.

9. Verarbeitungssystem nach Anspruch 7, das ferner umfaßt:
c) einen System-Entscheiderprozesses (RES-MAN), der ausgelegt ist, den gleichzeitigen Zugriff auf das Kommunikationsgerät (CD) durch die Systemprozesse zu steuern;
in dem alle diese Prozesse aktiv sind.

## Revendications

1. Procédé pour permettre l'échange d'informations, à travers un dispositif de communication (CD), entre un premier processus utilisateur (P1) et un deuxième processus utilisateur (P2), caractérisé en ce qu'il comprend les étapes consistant à :
a) activer un processus d'éditeur de liens système (LINKER) à travers un logiciel système capable d'établir un canal de communication sur ledit dispositif (CD) entre lesdits processus utilisateur (P1, P2) à réception d'une première procédure de base mise en oeuvre directement dans le matériel (CREATELINK), et
b) activer au moins un processus de gestionnaire système (CD-HAND) à travers ledit logiciel système capable de transférer des informations à travers ledit canal établi sur ledit dispositif (CD), allant d'un desdits processus utilisateur à l'autre à réception d'une deuxième procédure de base pour envoyer un message, mise en oeuvre directement dans le matériel (SEND-MSG), et d'une troisième procédure de base pour attendre un message, mise en oeuvre directement dans le matériel (WAIT-MSG).

2. Procédé selon la revendication 1, comprenant en outre l'étape consistant à :
c) activer au moins un processus d'arbitre système (RES-MAN) capable de contrôler l'accès simultané audit dispositif (CD) par lesdits processus système.

3. Procédé selon la revendication 1, dans lequel ladite étape b) est capable d'activer un premier et un deuxième processus gestionnaire (CD-HAND), et dans lequel ce transfert d'informations a lieu à réception de ladite deuxième procédure de base par ledit premier processus gestionnaire et à réception de ladite troisième procédure de base par ledit deuxième processus gestionnaire.

4. Procédé selon la revendication 1, dans lequel lesdites procédures de base de haut niveau sont envoyées par lesdits processus utilisateur.

5. Procédé selon la revendication 1, caractérisé en ce que ledit processus gestionnaire est conçu pour recevoir des procédures de base de bas niveau concernant l'initialisation et le test dudit dispositif, la lecture de données à partir dudit dispositif et l'écriture de données dans celui-ci, la transmission de signalisations vers ledit dispositif et la réception de signalisations de celui-ci ; et en ce que lesdites procédures de base de bas niveau ne peuvent pas en général être envoyées par un processus utilisateur.

6. Procédé selon l'une quelconque des revendications précédentes, caractérisé en ce que lesdites étapes consistent en séquences d'instructions codées en langage machine, mémorisées dans des moyens de mémorisation.

7. Système de traitement du type incluant au moins un processus utilisateur (P1) et un deuxième processus utilisateur (P2), caractérisé en ce qu'il comprend :
a) un processus d'éditeur de liens système (LINKER) conçu pour établir un canal de communication sur un dispositif de communication (CD) entre lesdits processus utilisateur à réception d'une première procédure de base de haut niveau (CREATE-LINK), et
b) au moins un processus de gestionnaire système (CD-HAND) capable de transférer des informations à travers ledit dispositif de communication (CD) allant de l'un desdits processus utilisateur à l'autre à réception d'une deuxième procédure de base de haut niveau pour envoyer un message (SEND-MSG) et d'une troisième procédure de base de haut niveau pour attendre un message (WAIT-MSG) ;
dans lequel tous lesdits processus sont actifs.

8. Système de traitement selon la revendication 7, comprenant un premier et un deuxième processus gestionnaire (CD-HAND) capables de transférer des informations à réception de ladite deuxième procédure de base par ledit premier processus gestionnaire et à réception de ladite troisième procédure de base par ledit processus gestionnaire.

9. Système de traitement selon la revendication 7, comprenant en outre :
c) un processus d'arbitre système (RES-MAN) conçu pour contrôler l'accès simultané audit dispositif de communication (CD) par lesdits processus système ; dans lequel tous lesdits processus sont actifs.
